# EUROPÄISCHE PATENTSCHRIFT

(11) **EP 3 611 404 B1**
(45) Veröffentlichungstag und Bekanntmachung des Hinweises auf die Patenterteilung: **22.12.2021**
(21) Anmeldenummer: 19191265.8
(22) Anmeldetag: 12.08.2019
(51) Int. Cl.: F16H 55/30

(54) **KETTENZAHNRAD**
SPROCKET
PIGNON D'ENTRAÎNEMENT À CHAÎNE

(30) Priorität: 14.08.2018 DE 102018119690
(43) Veröffentlichungstag der Anmeldung: 19.02.2020
(73) Patentinhaber: Röchling Industrial Xanten GmbH, 46509 Xanten (DE)
(72) Erfinder: Bosmann, Karl-Heinz, D-46509 Xanten (DE); Meijer, Jacob Willem, NL-7641 DG Wierden (NL)
(74) Vertreter: Meissner, Peter E.

(56) Entgegenhaltungen:
- WO-A1-2014/117550
- CN-A- 108 223 760
- US-A- 3 501 972
- US-A- 4 043 214
- US-A- 5 833 562

## Beschreibung

Die Erfindung betrifft ein Kettenzahnrad zur Anordnung auf einer Antriebswelle. Kettenzahnräder sind aus dem Stand der Technik an sich gut bekannt, weshalb es eines gesonderten druckschriftlichen Nachweises an dieser Stelle nicht bedarf.

Ein Kettenzahnrad verfügt über eine stirnaußenseitige Verzahnung, die im bestimmungsgemäßen Verwendungsfall im Eingriff mit einer Kette steht. Dabei ist das Kettenzahnrad typischerweise auf einer Antriebswelle angeordnet, so dass eine Verdrehbewegung der Antriebswelle unter Zugkrafteinwirkung zu einer Verfahrbewegung der über das Kettenzahnrad geführten Kette führt.

Aus der CN 1108223760A ist ein Kettenzahnrad zur Anordnung auf einer Antriebswelle bekannt, mit einem Zahnradkranz und einem Ringträger sowie einem Hülsenkörper, wobei der Ringträger eine Ausnehmung zur Aufnahme des Hülsenkörpers und der Hülsenkörper eine Ausnehmung zur Aufnahme der Antriebswelle aufweist. Der Hülsenkörper weist ein Außengewinde und der Ringkörper ein korrespondierendes Innengewinde auf, wobei beide Gewinde nicht in Eingriff miteinander sind, sondern erst durch einen Bolzen funktionsmäßig verbunden werden.

Eine vergleichbare Kettenradanordnung ist aus der US 4043214A bekannt, wobei hier die beiden Gewinde im endmontierten Zustand ineinander greifen.

Eine relative, axiale, Verschiebbarkeit des Zahnradkranzes gegenüber der Antriebswelle ist in beiden Fällen nicht vorgesehen oder möglich.

Es ist die Aufgabe der Erfindung, ein Kettenzahnrad bereitzustellen, das in einfacher Weise montiert und im Reparaturfall auch in einfacher Weise demontiert werden kann, und zwar vorzugsweise ohne Montage- und/oder Demontagearbeiten an der das Kettenzahnrad tragenden Antriebswelle vornehmen zu müssen.

Zur Lösung dieser Aufgabe wird mit der Erfindung ein Kettenzahnrad zur Anordnung auf einer Welle mit den Merkmalen des Patentanspruchs 1 vorgeschlagen

Das Kettenzahnrad nach der Erfindung verfügt über zwei Hauptbaukomponenten, nämlich über den Zahnradkranz einerseits und den Hülsenkörper andererseits. Dabei ist der Zahnradkranz im endmontierten Zustand unter Zwischenordnung des Hülsenkörpers auf der Welle, vorzugsweise der Antriebswelle oder der Abtriebswelle angeordnet.

Der Zahnradkranz stellt eine Ausnehmung bereit, die im endmontierten Zustand den Hülsenkörper aufnimmt. Der Hülsenkörper ist seinerseits mit einer Ausnehmung ausgerüstet, durch die hindurch im endmontierten Zustand die Welle, nachfolgend auch nur Antriebswelle genannt, geführt ist.

Diese zweiteilige Ausgestaltung hat den Vorteil, dass zur Anordnung des Kettenzahnrads auf einer Antriebswelle zunächst der Hülsenkörper und alsdann der Zahnradkranz montiert werden können. Es findet insofern zunächst eine Anordnung des Hülsenkörpers auf der Antriebswelle statt. Sobald der Hülsenkörper bestimmungsgemäß auf der Antriebswelle angeordnet ist, erfolgt eine Montage des Zahnradkranzes, wobei dieser auf dem auf der Antriebswelle bereits positionierten Hülsenkörper zu montieren ist.

Erfindungsgemäß ist des Weiteren vorgesehen, dass der Hülsenkörper auf seiner außenseitigen Mantelfläche mit einem Gewinde ausgerüstet ist. Ein hierzu korrespondierendes Gewinde trägt der Zahnradkranz, und zwar auf der dem Hülsenkörper zugewandten Innenseite der zur Aufnahme des Hülsenkörpers vorgesehenen Ausnehmung. Im endmontierten Zustand greifen diese beiden Gewinde ineinander.

Sobald der Zahnradkranz auf dem Hülsenkörper unter Eingriff der einander korrespondierenden Gewinde montiert ist, ist in Entsprechung der Gewindeausgestaltung noch eine Verdrehbewegung des Zahnradkranzes in Relation zum Hülsenkörper und damit auch in Relation zur Antriebswelle möglich. Diese Verdrehmöglichkeit dient montageseitig bzw. demontageseitig dazu, hinsichtlich der Positionierung des Zahnradkranzes in Längserstreckung der Antriebswelle eine Feinjustage vornehmen zu können. So gestattet es nämlich die erfindungsgemäße Ausgestaltung, den Zahnradkranz um die durch die Antriebswelle gebildete Verdrehachse zu verdrehen, was dazu führt, dass sich der Zahnradkranz durch das Gewinde geführt in Relation zum Hülsenkörper verdreht und dabei je nach Drehrichtung in axialer Richtung der Antriebswelle in Relation zur Antriebswelle wandert. Sobald die endgültige Ausrichtung des Zahnradkranzes in axialer Richtung der Antriebswelle erreicht ist, erfolgt eine Lagefixierung des Zahnradkranzes gegenüber dem Hülsenkörper, so dass auch eine Sicherung des Zahnradkranzes gegenüber dem Hülsenkörper in axialer Richtung gegeben ist. Gemäß dieser endmontierten Lage ist der Zahnradkranz gegenüber dem Hülsenkörper festgesetzt, womit eine verdrehsichere Verbindung zur Antriebswelle geschaffen ist, so dass im bestimmungsgemäßen Verwendungsfall eine in die Antriebswelle eingeleitete Verdrehbewegung unter Zwischenordnung des Hülsenkörpers auf den Zahnradkranz übertragen werden kann.

Die erfindungsgemäße Ausgestaltung erlaubt es in vorteilhafter Weise, zunächst den Hülsenkörper und alsdann den Zahnradkranz zu montieren, wobei die ineinandergreifenden Gewinde von Zahnradkranz einerseits und Hülsenkörper andererseits die Möglichkeit bieten, eine Feinausrichtung des Zahnradkranzes in axialer Richtung der Antriebswelle vornehmen zu können. Sobald die endgültige Position des Zahnradkranzes in Relation zur Antriebswelle eingestellt ist, erfolgt eine Lagefixierung und ―sicherung des Zahnradkranzes in Relation zum Hülsenkörper, womit eine verdrehsichere Anordnung des Kettenzahnrades auf der Antriebswelle gegeben ist.

In diesem Zusammenhang ist ferner von Vorteil, dass die Distanz in Wellenlängsrichtung zwischen der stirnseitigen Verzahnung des Zahnkranzes einerseits und der in Wellenlängsrichtung vorderen und/oder hinteren Körperkante des Hülsenkörpers andererseits je nach Einbausituation individuell und damit variabel eingestellt werden kann. Die erfindungsgemäße Ausgestaltung erlaubt es insofern, eine Vielzahl möglicher Distanzen zu überbrücken, wobei in Abkehr zum Stand der Technik hierfür nicht eine Vielzahl von Einzelbauteilen vorzuhalten ist. Erfindungsgemäß sind die beiden das Kettenzahnrad ausmachenden Hauptkomponenten, nämlich der Zahnradkranz einerseits und der Hülsenkörper andererseits vorgesehen, die aufgrund ihrer erfindungsgemäßen Ausgestaltung eine wahlweise Ausrichtung und Anpassung an die im jeweiligen Einzelfall gegebenen Einbaubedingungen ermöglichen.

Der Zahnradkranz verfügt über einen außenverzahnten Zahnradring und einen Ringträger. Dabei können Zahnradring und Ringträger als eigenständige Bauteile separat voneinander hergestellt und alsdann miteinander verbunden werden. Alternativ ist eine einstückige Ausgestaltung von Zahnradring und Ringträger.

Je nach gewünschter Ausgestaltung des Kettenzahnrades kann der Ringradträger als Scheibe, nach Art eines Topfes oder in Form von Speichen und/oder dgl. ausgebildet sein. Von erfindungswesentlicher Bedeutung ist allein, dass das Kettenzahnrad über einen Zahnradkranz einerseits und einen Hülsenkörper andererseits verfügt, wobei der Zahnradkranz und der Hülsenkörper über korrespondierende Gewinde miteinander in Wirkverbindung stehen, was es in schon vorbeschriebener Weise gestattet, im Falle einer Montage bzw. einer Demontage durch eine Verdrehbewegung des Zahnradkranzes in Relation zum Hülsenkörper eine Positionierung des Zahnradkranzes in axialer Richtung der Antriebswelle wählen und einstellen zu können.

Der Hülsenkörper ist zweiteilig ausgebildet und verfügt über zwei miteinander korrespondierende Halbschalen. Im endmontierten Zustand bilden die beiden zusammengesetzten Halbschalen den Hülsenkörper nach der Erfindung aus.

Diese Ausgestaltung erbringt den Vorteil, dass eine Anordnung des Hülsenkörpers auf der Antriebswelle ohne vorherige Montage bzw. Demontage der Antriebswelle möglich ist. Insbesondere im Reparaturfall ist dies von Vorteil. So kann nämlich die Antriebswelle in ihrer Lage unverändert bleiben. Der Hülsenkörper kann auf die Antriebswelle in einfacher Weise dadurch aufgebracht werden, dass die den Hülsenkörper bildenden Halbschalen auf die Antriebswelle aufgesetzt und anschließend miteinander verbunden werden.

Für eine verdrehsichere Anordnung des Hülsenkörpers auf der Antriebswelle weist eine der beiden Halbschalen eine längsverlaufende Nut zur Aufnahme einer antriebswellenseitigen Passfeder auf. Im endmontierten Zustand kommt die Passfeder innerhalb der Nut der Halbschale zu liegen, so dass nach einem Verbinden der beiden den Hülsenkörper bildenden Halbschalen eine verdrehfeste Anordnung des Hülsenkörpers in Relation zur Antriebswelle gegeben ist.

Das Gewinde zwischen Hülsenkörper und Zahnradkranz ist zudem bevorzugterweise derart ausgewählt, dass im endmonierten Zustand ein Verklemmen des Hülsenkörpers gegenüber der ihn aufnehmenden Welle stattfindet, wodurch noch eine bessere Kraftübertragung zwischen Welle und Hülsenkörper und damit auch auf den Zahnradkranz gegeben ist.

Der Hülsenkörper ist bevorzugterweise als standardisiertes Bauteil ausgebildet. Zur Anpassung des Hülsenkörpers an die Antriebswelle ist vor einer Montage des Hülsenkörpers die vom Hülsenkörper bereitgestellte Ausnehmung zur Aufnahme der Antriebswelle in Entsprechung des Durchmessers der Antriebswelle aufzubohren. Auch die zur Aufnahme der antriebswellenseitigen Passfeder vorgesehene Nut ist ggf. an die Abmessungen der antriebswellenseitigen Passfeder anzupassen.

Der Vorteil dieser Ausgestaltung liegt darin, dass unabhängig von der geometrischen Ausgestaltung der Antriebswelle ein für alle Antriebswellen gleichsam passender Standard-Hülsenkörper eingesetzt werden kann. Dies verringert die Lagehaltung, stellt Kompatibilität sicher und vereinfacht die Montage. So ist insbesondere im Reparaturfall eines defekten Kettenzahnrades ein Austausch in einfacher Weise dadurch zu erzielen, dass der Standard-Hülsenkörper vor einer Montage aufgebohrt und die Passfedernut angepasst und alsdann der Hülsenkörper auf der Antriebswelle montiert wird. Alsdann ist in einem zweiten Montageschritt der Kettenzahnkranz auf dem Hülsenkörper anzuordnen, in seiner axialen Stellung zur Antriebswelle in Entsprechung der vorstehenden Ausführungen auszurichten und in einem letzten Montageschritt in Relation zum Hülsenkörper lagezusichern. Damit ist unabhängig von der geometrischen Ausgestaltung der Antriebswelle ein Austausch eines defekten Kettenzahnrades gegen ein neues Kettenzahnrad in einfacher Weise ermöglicht.

Erfindungsgemäß ist vorgesehen, dass die beiden Halbschalen im endmontierten Zustand miteinander verschraubt sind. Eine solche Verschraubung kann am Einsatzort insbesondere im Reparaturfall in einfacher Weise ausgebildet werden. Dabei ist lediglich darauf zu achten, dass das von den beiden Halbschalen anteilig bereitgestellte Gewinde durch Verkanten der beiden Halbschalen nicht fehlausgebildet wird. Ansonsten ist es unkritisch, wenn die beiden Halbschalen unter Belassung eines Toleranzspaltraumes beabstandet zueinander angeordnet sind.

Gemäß einem weiteren Merkmal der Erfindung ist vorgesehen, dass der Zahnradkranz zweiteilig ausgebildet ist und über zwei miteinander korrespondierende Zahnradkranzhälften verfügt, die jeweils einstückig ausgebildet sein können. Diese beiden Zahnradkranzhälften ermöglichen eine Zahnradkranzmontage ohne vorherigen Ausbau der Antriebswelle. So lassen sich die beiden Zahnradkranzhälften auf einen auf der Antriebswelle vormontierten Hülsenkörper aufsetzen und miteinander verbinden, beispielsweise durch Verschrauben. Sobald die beiden Zahnradkranzhälften am Hülsenkörper angeordnet und miteinander verbunden sind, kann in schon vorbeschriebener Weise durch Verdrehbewegung des Zahnradkranzes in Relation zum Hülsenkörper eine Positionierung des Zahnradkranzes in axialer Richtung zur Antriebswelle vorgenommen werden. Nach einer Positionssicherung des Zahnradkranzes in Relation zum Hülsenkörper ist diese Verdrehmöglichkeit gesperrt, womit eine verdrehsichere Anordnung des aus zwei Hälften gebildeten Zahnradkranzes in Relation zum Hülsenkörper gewährleistet ist.

Gemäß einem weiteren Merkmal der Erfindung ist vorgesehen, dass zur Verbindung der beiden Zahnradkranzhälften Klemmbügel vorgesehen sind, die Klemmstege bereitstellen, die im endmontierten Zustand in korrespondierend ausgebildete Ausnehmungen der Zahnradkranzhälften eingreifen.

Der Einsatz von Klemmbügeln ist insbesondere dann bevorzugt, wenn der Ringträger nach Art eines Topfes ausgebildet ist. In diesem Fall ist der in Wirkverbindung mit dem Hülsenkörper stehende Verbindungsbereich des Ringträgers verschraubt. Der hülsenkörperentfernte Verbindungsbereich des Ringträgers ist mittels der Klemmbügel gekoppelt, wobei die Klemmbügel den Vorteil mit sich bringen, eine einseitig zugängliche Montage zu ermöglichen. Es ist so gestattet, das Kettenzahnrad unter Belassung eines nur minimalen Beabstandungsspalts zu einer benachbarten Baugruppe und/oder einer Begrenzungswand anordnen zu können. Der Klemmbügel verfügt über Klemmstege, die in entsprechend ausgebildete Ausnehmungen des Kettenzahnrades eingreifen. Auf diese Weise ist eine form- und kraftschlüssige Verbindung zwischen den beiden Zahnradkranzhälften gegeben. Der Klemmbügel ist mit einer zwischen den beiden Klemmstegen angeordneten Schraube ausgerüstet, die durch eine Ausnehmung im Kettenzahnrad zur anderen Kettenzahnradseite geführt ist, wo eine Verschraubung stattfinden kann. Damit ist ein einseitiger Zugriff auf den Klemmbügel zur Lagefixierung gewährleistet.

Gemäß einem weiteren Merkmal der Erfindung sind Mittel vorgesehen, die dazu dienen, den Zahnradkranz auf dem Hülsenkörper verdrehfest anzuordnen. Diese Mittel werden montiert, nachdem der bereits endfertig montierte Zahnradkranz zur Positionseinstellung in axialer Richtung der Antriebswelle in Relation zum Hülsenkörper endfertig verdreht ist. Sobald die Mittel montiert sind, ist eine weitere Verdrehbewegung des Zahnradkranzes in Relation zum Hülsenkörper nicht mehr möglich, womit das Kettenzahnrad endmontiert ist.

Gemäß einem weiteren Merkmal der Erfindung ist vorgesehen, dass ein Mittel zur verdrehfesten Anordnung des Zahnradkranzes auf dem Hülsenkörper ein Bolzen ist. Im endmontierten Zustand greift der Bolzen in korrespondierend zueinander ausgebildete Nuten von Hülsenkörper und Zahnradkranz gleichsam ein. Dabei sind die beiden Nuten jeweils im Querschnitt teilkreisförmig ausgebildet, so dass sie bei entsprechender Stellung von Zahnradkranz und Hülsenkörper in Überdeckung gebracht eine Bohrung ausbilden, in die der Bolzen zwecks Lagefixierung einzusetzen ist. Es können eine Mehrzahl solcher Nuten über den Umfang des Hülsenkörpers verteilt vorgesehen sein. Bei beispielsweise zwei Nuten kann eine Lagefixierung alle 180° Verdrehstellung des Zahnradkranzes in Relation zum Hülsenkörper erfolgen. Bei drei Nuten ist eine Lagefixierung alle 120° Verdrehbewegung möglich.

Mit der Erfindung wird insgesamt ein Kettenzahnrad bereitgestellt, das in einfacher Weise montiert bzw. demontiert werden kann, und zwar ohne einen Ausbau der Antriebswelle, auf der das Kettenzahnrad zu montieren ist. Es ist zudem in einfacher Weise eine Feinausrichtung des die Verzahnung tragenden Zahnradrings bzw. des Zahnradkranzes in axialer Richtung der Antriebswelle möglich. Dies gestattet eine insbesondere platzsparende Nebenordnung des Kettenzahnrades zu benachbarten Baukomponenten und/oder Gehäusewänden. Der Zahnradkranz kann als standardisiertes Bauteil ausgebildet werden, das zur Anordnung auf der Antriebswelle größenunabhängig von der Antriebswelle ist. Denn eine Anordnung des Zahnkranzes findet unter Zwischenordnung des Hülsenkörpers auf der Antriebswelle statt. Damit ist eine Kompatibilität in jedem Fall gewährleistet, denn der Radkranz steht in Wirkverbindung mit dem Hülsenkörper, der vorausgebildet ist.

Auch der Hülsenkörper ist bevorzugterweise standardisiert ausgebildet. Zur Anordnung auf der Antriebswelle ist ggf. vor Ort insbesondere im Reparaturfall eine Anpassung der die Antriebswelle aufnehmenden Ausnehmung des Hülsenkörpers sowie der Passfedernut vorzunehmen. Dies ist durch einfaches Aufbohren möglich.

Weitere Merkmale und Vorteile der Erfindung ergeben sich aus der nachfolgenden Beschreibung anhand der Figuren. Dabei zeigen
- Fig. 1: in schematisch perspektivischer Darstellung ein erfindungsgemäßes Kettenzahnrad;

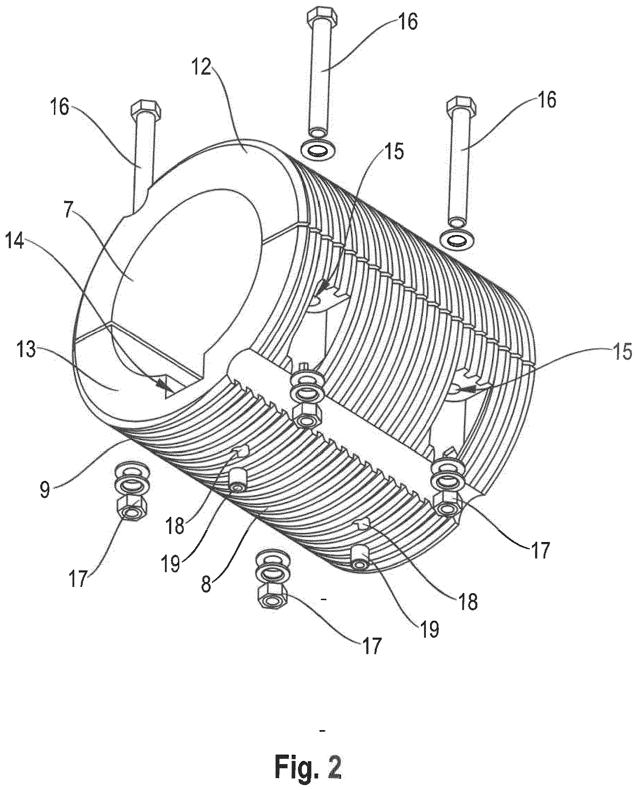

- Fig. 2: in schematisch perspektivischer Darstellung den Hülsenkörper eines erfindungsgemäßen Kettenzahnrades;
- Fig. 3: in einer schematischen Draufsicht von vorn den Zahnradkranz eines erfindungsgemäßen Kettenzahnrades;
- Fig. 4: in teilgeschnittener Seitenansicht den Zahnradkranz nach Fig. 3 gemäß Schnittlinie IV-IV;
- Fig. 5: in geschnittener Seitenansicht den Zahnradkranz nach Fig. 3 gemäß Schnittlinie V-V;
- Fig. 6: in schematischer Draufsicht von vorne das erfindungsgemäße Kettenzahnrad;
- Fig. 7: in geschnittener Seitenansicht das erfindungsgemäße Kettenzahnrad nach Fig. 6 gemäß Schnittlinie VII-VII;
- Fig. 8: in schematischer Schnittdarstellung einen Klemmbügel;
- Fig. 9: in schematischer Perspektivdarstellung ein Klärbecken mit einem Abräumer, der über ein erfindungsgemäßes Kettenzahnrad verfügt.

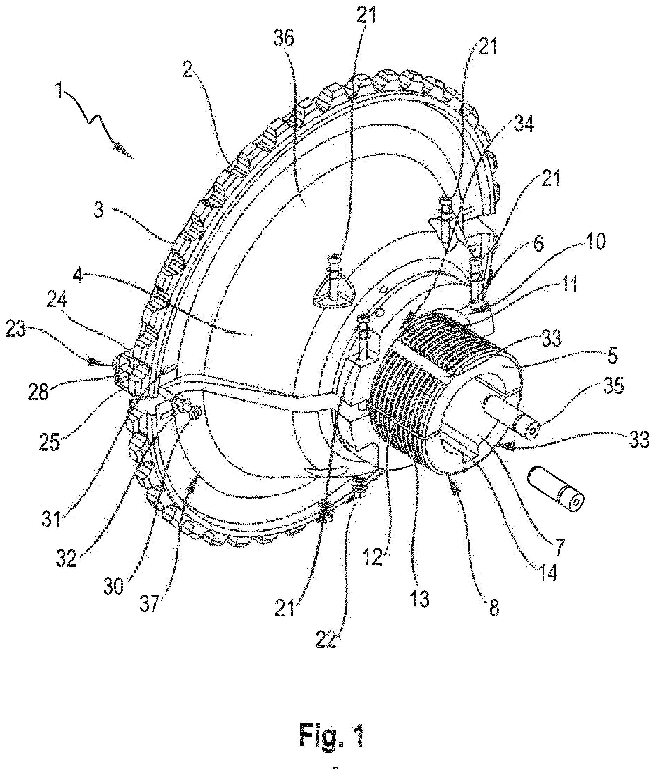

Fig. 1 lässt in schematisch perspektivischer Darstellung ein Kettenzahnrad 1 erkennen.

Das Kettenzahnrad 1 verfügt über einen Zahnradkranz 2 und einen Hülsenkörper 5. Dabei stellt der Zahnradkranz 2 seinerseits einen Zahnradring 3 und einen Ringträger 4 bereit. Der Zahnradkranz 2 und der Hülsenkörper 5 sind vorzugsweise aus Kunststoff gebildet.

Zur Anordnung des Kettenzahnrades 1 auf einer Antriebswelle verfügt der Hülsenkörper 5 über eine Ausnehmung 7, die der Aufnahme einer Antriebswelle dient. Der Ringträger 4 des Zahnradkranzes 2 verfügt seinerseits über eine Ausnehmung 6 zur Aufnahme des Hülsenkörpers 5. Damit ist der Zahnradkranz 2 im endmontierten Zustand des Kettenzahnrades 1 unter Zwischenordnung des Hülsenkörpers 5 auf einer Antriebswelle angeordnet.

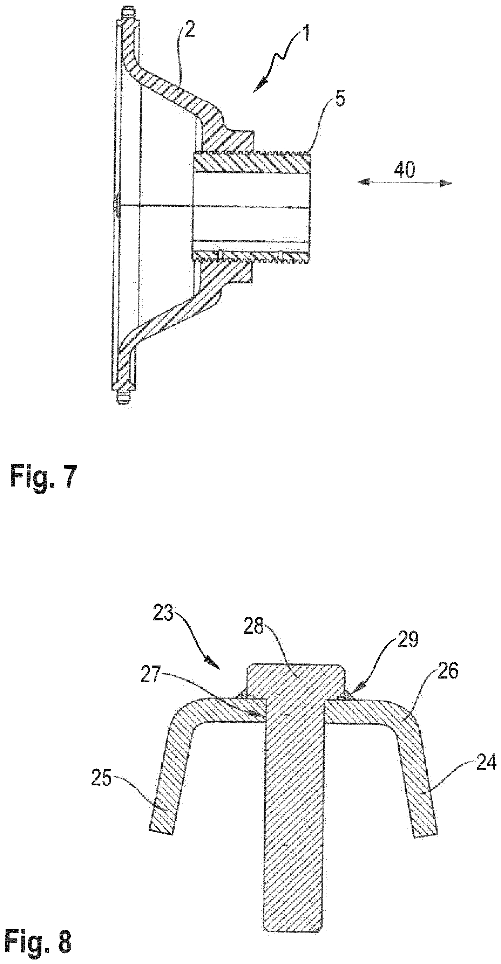

Der Hülsenkörper 5 verfügt über eine außenseitige Mantelfläche 8, die mit einem Gewinde 9 ausgerüstet ist. Ein hierzu korrespondierendes Gewinde 11 wird von der Innenseite 10 der Ausnehmung 6 des Ringträgers 4 bereitgestellt. Im endmontierten Zustand greifen diese beiden Gewinde 9 und 11 ineinander, wie dies die Zeichnungen nach Fig. 1 und 7 erkennen lassen.

Nach einer Montage des Zahnradkranzes 2 auf dem Hülsenkörper 5 kann aufgrund der Gewindeausgestaltung eine Positionierung des Zahnradkranzes 2 in Relation zum Hülsenkörper 5 in axialer Richtung, d.h. in Längsrichtung 40 der Antriebswelle stattfinden (Fig. 7). Diese axiale Ausrichtung des Zahnradkranzes 2 gegenüber dem Hülsenkörper 5 erfolgt dadurch, dass der Zahnradkranz 2 in Relation zum Hülsenkörper 5 verdreht wird. Aufgrund der Steigung der sich im Eingriff befindlichen Gewinde 9 und 10 von Zahnradkranz 2 und Hülsenkörper 5 ergibt sich je nach Drehrichtung des Zahnradkranzes 2 eine axiale Verschiebung des Zahnradkranzes 2 in Relation zum Hülsenkörper 5 mit Bezug auf die Zeichnungsebene nach Fig. 7 entweder nach links oder nach rechts. Hierdurch ist eine Feinabstimmung der axialen Lage des Zahnradkranzes 2 in Relation zum Hülsenkörper 5 und damit auch zur Antriebwelle gestattet.

Sobald der Zahnradkranz 2 in seiner axialen Ausrichtung positioniert ist, erfolgt eine verdrehgesicherte Anordnung des Zahnradkranzes 2 gegenüber dem Hülsenkörper 5. Zu diesem Zweck sind Bolzen 35 vorgesehen (Fig. 1), die im endmontierten Zustand in entsprechende Nuten 33 und 34 von Hülsenkörper 5 und Zahnradkranz 2 eingreifen.

Wie Fig. 1 in diesem Zusammenhang erkennen lässt, sind die Nuten 33 und 34 jeweils als Halbnuten ausgebildet. Diese sind durch entsprechende Verdrehbewegung des Zahnradkranzes 2 in Überdeckung zueinander zu bringen, wobei im Überdeckungsfall eine Bohrung zum Einführen der Bolzen 35 gegeben ist. Zur axialen Sicherung montierter Bolzen 35 können Klemmschrauben vorgesehen sein, die im endmontierten Zustand in von den Bolzen 35 jeweils bereitgestellten Ringnuten eingreifen. Damit ist eine axiale Sicherung der Bolzen 35 gegeben. Und die Bolzen 35 sorgen ihrerseits dafür, dass eine Verdrehbewegung des Zahnradkranzes 2 gegenüber dem Hülsenkörper 5 gesperrt ist.

Damit ist eine axiale und radiale Sicherung des Zahnradkranzes 2 gegenüber dem Hülsenkörper 5 erreicht.

Gemäß dem gezeigten Ausführungsbeispiel nach Fig. 1 sind um 180° verdreht zueinander zwei Nuten 33 bzw. 34 vorgesehen. Dies gestattet es, den Zahnradkranz 2 jeweils um 180° gegenüber dem Hülsenkörper 5 zu verdrehen und lagezusichern. Diese Abstufung kann weiter reduziert werden, wenn drei, vier oder noch mehr Nuten 33 bzw. 34 vorgesehen sind, so dass sich das Teilungsverhältnis verkleinert.

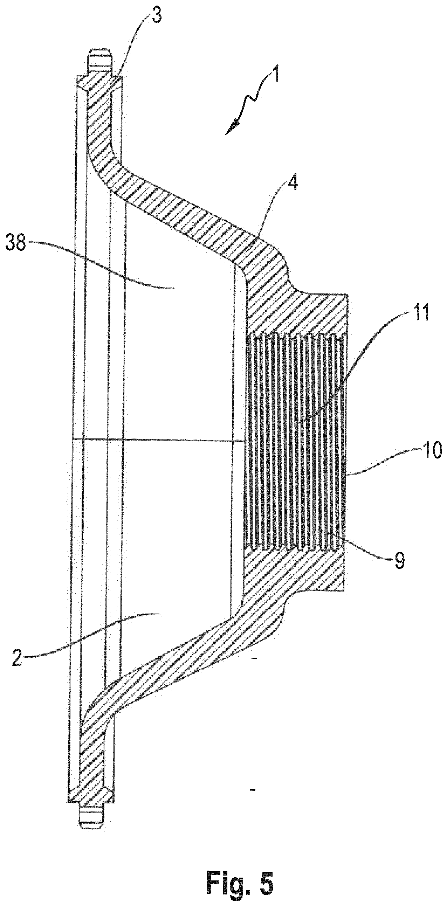

Fig. 5 lässt in vergrößerter Darstellung den Hülsenkörper 5 erkennen. Dieser verfügt in schon vorbeschriebene Weise über eine Ausnehmung 7, durch die hindurch im endmontierten Zustand die Antriebswelle geführt ist, auf der das Kettenzahnrad 1 montiert ist. Zur verdrehsicheren Anordnung des Hülsenkörpers 5 gegenüber der Antriebswelle ist eine Nut 14 vorgesehen, die korrespondierend zu einer antriebswellenseitigen Passfeder ausgebildet ist.

Zwecks vereinfachter Montage ist der Hülsenkörper 5 zweiteilig ausgebildet und verfügt über zwei Halbschalen 12 und 13. Diese sind im endfertig montierten Zustand miteinander verschraubt, zu welchem Zweck Schrauben 16 und entsprechende Muttern 17 vorgesehen sind, die durch von den Halbschalen 12 und 13 bereitgestellte Bohrungen 15 hindurchgeführt sind. Für eine Montage ist der Hülsenkörper 5 zu zerlegen und die Halbschalen 12 und 13 sind alsdann auf die Antriebswelle aufzusetzen. Dabei ist ein passgerechter Sitz erreicht, wenn die antriebswellenseitige Passfeder in der dafür vorgesehenen Nut 14 zu liegen kommt. Alsdann sind die beiden Halbschalen 12 und 13 miteinander zu verschrauben, womit dann ein sicherer Sitz des Hülsenkörpers 5 auf der Antriebswelle erreicht ist. Für eine zusätzliche Verklemmung mit der antriebswellenseitigen Passfeder können Klemmschrauben 19 vorgesehen sein, die durch entsprechende Bohrungen 18 des Hülsenkörpers 5 hindurchgreifen. Diese Klemmschrauben 19 sind nach einer Anordnung des Hülsenkörpers 5 auf der Antriebswelle anzuziehen, so dass eine Klemmung mit der antriebswellenseitigen Passfeder entsteht.

Der Hülsenkörper 5 ist hinsichtlich seiner Ausnehmung 7 und seiner Nut 14 vorzugsweise standardisiert ausgebildet, wobei hinsichtlich der Ausnehmung 7 und der Nut 14 geometrische Abmessungen gegeben sind, die mit den kleinstmöglichen geometrischen Abmessungen einer Antriebswelle korrespondieren. Ist der Hülsenkörper 5 auf einer Antriebswelle mit größeren geometrischen Abmessungen zu montieren, so ist vor einer bestimmungsgemäßen Montage des Hülsenkörpers 5 zunächst die Bohrung 7 aufzubohren und/oder die Nut 14 zu vergrößern. Alsdann kann in schon vorbeschriebener Weise eine Anordnung des Hülsenkörpers 5 auf der Antriebswelle stattfinden.

Die standardisierte Ausbildung des Hülsenkörpers 5 erbringt den Vorteil, dass ein Hülsenkörper 5 in jedem Fall passend zur Antriebswelle ausgebildet werden kann, was insbesondere die Montage im Reparaturfall erleichtert. Denn es ist weder erforderlich, eine für die Antriebswelle passenden Hülsenkörper vorzuhalten, noch ist eine vorausgehende Vermessung der Antriebswelle zur Bereithaltung eines korrespondierend hierzu ausgebildeten Hülsenkörpers 5 erforderlich. Da der Hülsenkörper 5 auf die im Durchmesser kleinstmögliche Antriebswelle abgestimmt ist, ist in jedem Fall Kompatibilität gewährleistet. Fällt die Antriebswelle im Durchmesser und/oder hinsichtlich ihrer Passfeder größer aus als der kleinstmögliche Ausgestaltungsfall, so ist der Hülsenkörper 5 entsprechend anzupassen, was beispielsweise durch einfaches Aufbohren ermöglicht ist.

Der Hülsenkörper 5 ist in seinen Außenabmessungen und hinsichtlich seines Gewindes 9 stets gleich ausgebildet, so dass in jedem Fall unabhängig von der geometrischen Ausgestaltung der Antriebswelle geometrische Kompatibilität zum Zahnradkranz 2 gegeben ist.

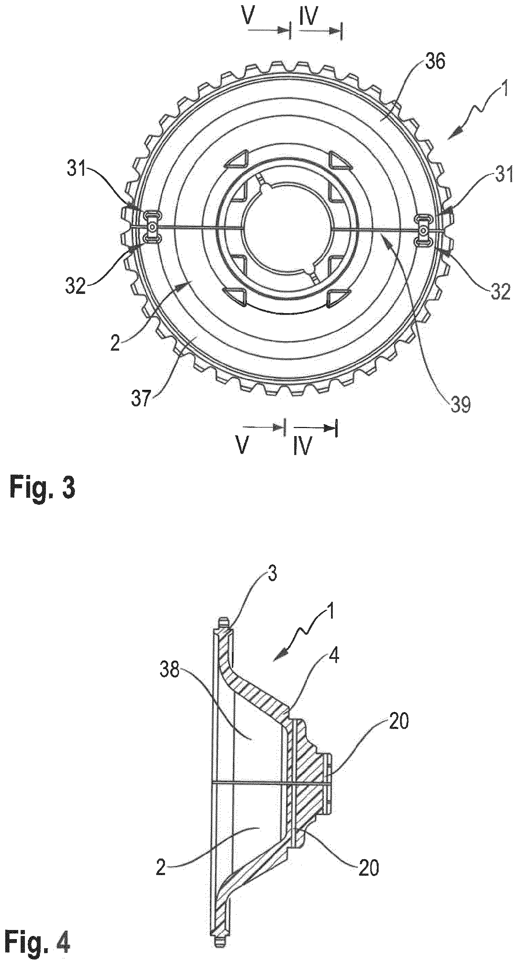

Auch der Zahnradkranz 2 ist bevorzugterweise zweiteilig ausgebildet und verfügt über eine erste Zahnradkranzhälfte 36 und eine zweite Zahnradkranzhälfte 37, wie dies insbesondere eine Zusammenschau der Figuren 1 und 3 erkennen lässt. Im endmontierten Zustand liegen die beiden Zahnradkranzhälften 36 und 37 entlang einer Fuge 39 aneinander (Fig. 3).

Die zweiteilige Ausgestaltung von Hülsenkörper 5 einerseits und Zahnradkranz 2 andererseits ist insbesondere aus Gründen der vereinfachten Montage von Vorteil. Denn für eine Anordnung des Kettenzahnrades 1 auf einer Antriebswelle ist es nicht erforderlich, die Antriebswelle zu demontieren. Vielmehr gestattet es die jeweils zweiteilige Ausgestaltung von Hülsenkörper 5 und Zahnradkranz 2, dass der Hülsenkörper 5 einerseits und der Zahnradkranz 2 andererseits jeweils mit den jeweiligen Hälften auf die Antriebswelle aufgesetzt und anschließend die beiden Hälften miteinander verbunden werden können. Dabei erfolgt in schon vorbeschriebener Weise zunächst eine Montage des Hülsenkörpers 5 auf der Antriebswelle, gefolgt von einer Anordnung des Zahnradkranzes 2 auf dem schon vormontierten Hülsenkörper 5.

Die Zahnradkranzhälften 36 und 37 sind im endmontierten Zustand vorzugsweise miteinander verschraubt. Zu diesem Zweck verfügen die Zahnradkranzhälften 36 und 37 jeweils über Bohrungen 20, wie dies die Figuren 3 und 4 erkennen lassen. Im endmontierten Zustand sind durch diese Bohrungen 20 Gewindestangen 21 geführt, die endseitig mit einem Gewinde zur Aufnahme einer Mutter 22 ausgerüstet sind.

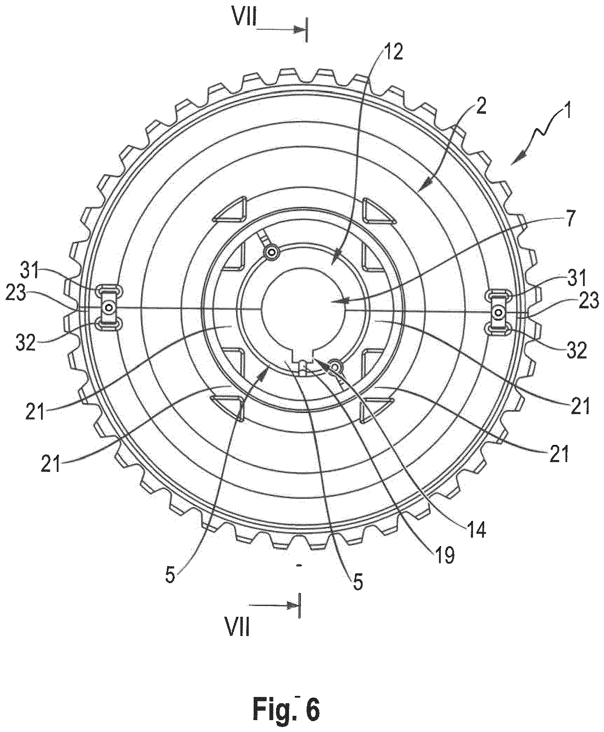

Den endmontierten Zustand von Zahnkranz 2 und Hülsenkörper 5 lassen insbesondere die Figuren 6 und 7 erkennen.

Wie sich des Weiteren aus einer Zusammenschau der Figuren 1 und 6 ergibt, findet eine Verschraubung der Zahnradkranzhälften 36 und 37 mittels der Gewindestangen 21 hülsenkörpernah statt. Zahnradringseitig sind zur Verbindung der beiden Zahnradkranzhälften 36 und 37 Klemmbügel 23 vorgesehen, wie ein solcher Klemmbügel 23 beispielsweise in Fig. 8 dargestellt ist.

Ein Klemmbügel 23 verfügt über zwei Klemmstege 24 und 25, die im endmontierten Zustand in entsprechende Ausnehmungen 31 und 32 der Zahnradkranzhälften 36 und 37 eingreifen. Die beiden Klemmstege 24 und 25 sind über einen Verbindungssteg 26 miteinander verbunden, der eine Bohrung 27 trägt, durch die hindurch eine Schraube 28 geführt ist. Die Schraube 28 ist mit dem Verbindungssteg vorzugsweise stoffschlüssig verbunden, zu welchem Zweck im gezeigten Ausführungsbeispiel gemäß Fig. 8 eine Schweißnaht 29 ausgebildet ist.

Die Schraube 28 trägt ein Gewinde, das im endmontierten Zustand mit einer Mutter 30 zusammenwirkt, wie dies Fig. 1 erkennen lässt. Dabei ist die Schraube 28 durch eine vom Zahnradkranz 2 bereitgestellte Ausnehmung hindurchgeführt.

Wie insbesondere die Fig. 1 erkennen lässt, liegt der besondere Vorteil des Klemmbügels 23 darin, dass dieser von der einen Seite in die Ausnehmungen 31 und 32 eingeführt wird, eine Lagefixierung durch Setzen der Mutter 30 aber von der anderen Seite her erfolgt. Dies ermöglicht es, insbesondere eine Demontage des Zahnradkranzes 2 nur von einer Seite vornehmen zu können. Darüber hinaus ist der Klemmbügel 23 sehr platzsparend ausgebildet, so dass der Zahnradkranz 2 mit seinem Zahnradring 3 einem benachbarten Objekt oder einer Gehäusewand nahe nebengeordnet werden kann, ohne dass der Klemmsteg 23 eine solche nahe Nebenordnung behindert.

Im gezeigten Ausführungsbespiel ist der Ringträger 4 nach Art eines Topfes ausgebildet. Hierdurch entsteht ein vom Ringträger 4 umschlossener Volumenraum 38, wie sich dies insbesondere aus den Darstellungen nach den Figuren 4 und 5 ergibt. Dieser Volumenraum 38 kann dazu dienen, dass für eine Lagerung einer Antriebswelle vorgesehene Lager aufzunehmen. Das Kettenrad 21 umschließt mithin das antriebswellenseitige Lage, womit eine nahe Nebenordnung des vom Kettenzahnrad 1 bereitgestellten Zahnradrings 3 zu einem zahnradringseitigen Objekt und/oder einer Gehäusewand gestattet ist. Dabei ist aufgrund der erfindungsgemäßen Ausgestaltung eine einfache Montage möglich, und zwar deshalb, weil ein einseitiger Zugriff auf das Kettenzahnrad 1 ausreichend ist und weil eine Anordnung des Kettenzahnrades auch auf einer bereits schon montierten Antriebswelle möglich ist. Darüber hinaus kann aufgrund der Gewindeausgestaltung zwischen Hülsenkörper 5 und Zahnradkranz 2 eine Feinpositionierung in Längsrichtung 40 stattfinden, so dass es im Sinne einer einfachen Montage ausreichend ist, zunächst den Hülsenkörper 5 in seiner Ausrichtung zunächst einmal nur grob in Relation zur Antriebswelle auszurichten, da eine Feinausrichtung im Nachgang dadurch vorgenommen werden kann, dass der Zahnradkranz 2 in Längsrichtung 40 in Relation zum Hülsenkörper 5 und damit auch in Relation zur Antriebswelle ausgerichtet wird.

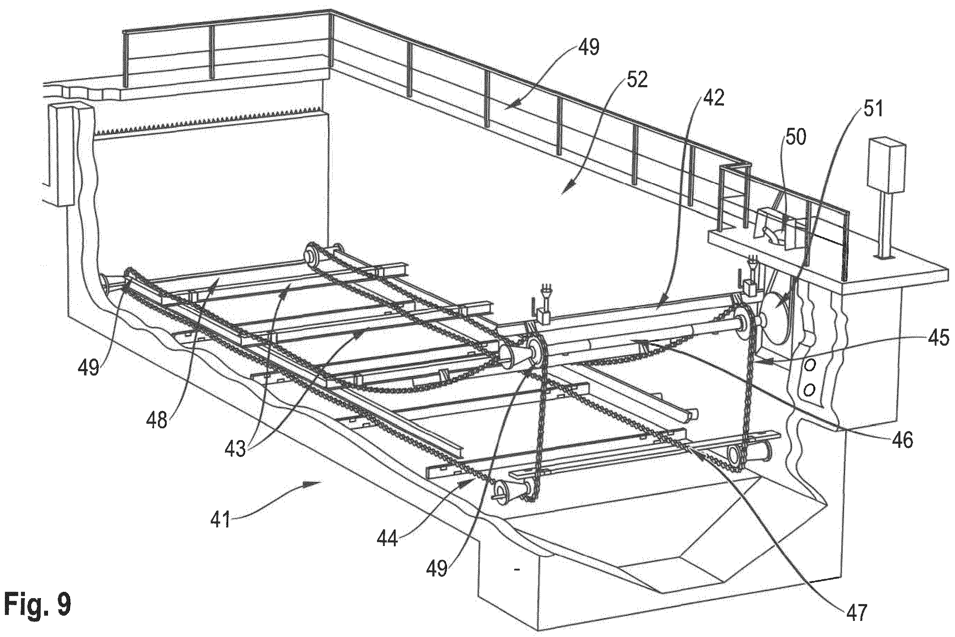

Eine mögliche Verwendung des erfindungsgemäßen Kettenzahnrades 1 zeigt das Ausführungsbeispiel nach Fig. 9.

In Fig. 9 ist schematisch ein Klärbecken 41 zur Klärung von zum Beispiel Wasser gezeigt. Diese Klärbecken 41 verfügt über einen aus dem Stand der Technik an sich bekannten Abräumer 42.

Im bestimmungsgemäßen Verwendungsfall wird das Klärbecken 41 mit zu reinigendem Wasser befüllt, das zunächst stehen gelassen wird, so dass sich im Wasser befindliche Verunreinigungen nach unten absetzen können. Nach einer gewissen Zeit wird der Abräumer 42 aktiviert, der die nach unten abgesetzten Verunreinigungen abzieht und zu einer Sammelstelle verbringt, von wo aus dann eine Abförderung der Verunreinigungen stattfinden kann.

Der Abräumer 42 verfügt über eine Mehrzahl von im Klärbecken 41 quer ausgerichteter Balken 43. Diese Balken 43 sind einendseitig wie anderendseitig an einer jeweiligen Kette 44 bzw. 45 angeordnet. Diese Ketten 44 und 45 sind über Umlenkzahnräder 49 geführt, so dass im Betriebsfall ein Verfahren der Balken 43 in Kettenlängsrichtung erfolgt. Dabei sind die Umlenkzahnräder 49 auf jeweiligen Wellen 46, 47 und 48 angeordnet.

Zum Antrieb der Ketten 44 und 45 dient die als Antriebswelle ausgestaltete Welle 46. Zum Antrieb dieser Welle 46 ist ein Motor 50 vorgesehen, der über eine Antriebskette 51 in Wirkverbindung mit der Welle 46 steht. Im bestimmungsgemäßen Betriebsfall erfolgt eine Verdrehbewegung der Welle 46 motorgetrieben durch den Motor 50, wobei der Motor 50 über die Antriebskette 51 in Wirkverbindung mit der Welle 46 steht.

Zur Kraftübertragung vom Motor 50 auf die Antriebswelle 46 dient ein erfindungsgemäßes Kettenzahnrad 1, das auf der Welle 46 montiert ist.

Aufgrund der erfindungsgemäßen Ausgestaltung des Kettenzahnrads 1 ist es möglich, dieses unter Belassung eines nur minimalen Spalts der Wandung 52 des Klärbeckens 41 nahe nebenzuordnen. Dabei nimmt der vom Kettenzahnrad 1 bereitgestellte Volumenraum 38 das innenseitig der Wand 52 vorgesehene Lager der Welle 46 auf. Es ist so eine platzoptimierte Anordnung gewährleistet.

Das Kettenzahnrad 1 verschleißt auch im bestimmungsgemäßen Verwendungsfall des Klärbeckens 41 mit der Zeit und ist deshalb von Zeit zu Zeit auszutauschen. Die erfindungsgemäße Ausgestaltung ermöglicht dies in einfacher Weise. Denn für einen Austausch des Kettenzahnrades 1 ist es in schon vorbeschriebener Weise nicht erforderlich, die Welle 46 auszutauschen. Darüber hinaus ist Kompatibilität zur geometrischen Ausgestaltung der Welle 46 gegeben, so dass es keiner Lagerhaltung und keiner vorbereitenden Maßnahmen für eine bestimmungsgemäße Montage bzw. Demontage des Kettenzahnrades 1 bedarf.

**Bezugszeichen**

| | | | |
|---|---|---|---|
| 1 | Kettenzahnrad | 27 | Bohrung |
| 2 | Zahnradkranz | 28 | Schraube |
| 3 | Zahnradring | 29 | Schweißnaht |
| 4 | Ringträger | 30 | Mutter |
| 5 | Hülsenkörper | 31 | Ausnehmung |
| 6 | Ausnehmung Ringträger | 32 | Ausnehmung |
| 7 | Ausnehmung Hülsenkörper | 33 | Nut |
| 8 | Mantelfläche | 34 | Nut |
| 9 | Gewinde | 35 | Bolzen |
| 10 | Innenseite | 36 | Zahnradkranzhälfte |
| 11 | Gewinde | 37 | Zahnradkranzhälfte |
| 12 | Halbschale | 38 | Volumenraum |
| 13 | Halbschale | 39 | Fuge |
| 14 | Nut | 40 | Längsrichtung |
| 15 | Bohrung | 41 | Klärbecken |
| 16 | Schraube | 42 | Abräumer |
| 17 | Mutter | 43 | Balken |
| 18 | Bohrung | 44 | Kette |
| 19 | Klemmschraube | 45 | Kette |
| 20 | Bohrung | 46 | Welle |
| 21 | Gewindestange | 47 | Welle |
| 22 | Mutter | 48 | Welle |
| 23 | Klemmbügel | 49 | Umlenkzahnrad |
| 24 | Klemmsteg | 50 | Motor |
| 25 | Klemmsteg | 51 | Antriebskette |
| 26 | Verbindungssteg | 52 | Wand |

## Patentansprüche

1. Kettenzahnrad zur Anordnung auf einer Antriebswelle, mit einem Zahnradkranz (2), der einen außenverzahnten Zahnradring (3) und einen Ringträger (4) aufweist, und mit einem Hülsenkörper (5), wobei der Ringträger (4) eine Ausnehmung (6) zur Aufnahme des Hülsenkörpers (5) und der Hülsenkörper (5) eine Ausnehmung (7) zur Aufnahme der Antriebswelle aufweist, so dass der Zahnradkranz (2) unter Zwischenordnung des Hülsenkörpers (5) auf der Antriebswelle anordbar ist,
*der Hülsenkörper (5) zweiteilig ausgebildet ist und über zwei miteinander korrespondierende Halbschalen (12, 13) verfügt, wobei*
*die beiden Halbschalen (12, 13) im endmontierten Zustand miteinander verschraubt sind,*
wobei der Hülsenkörper (5) auf seiner außenseitigen Mantelfläche (8) mit einem Gewinde (9) ausgerüstet ist, und wobei die zur Aufnahme des Hülsenkörpers (5) vorgesehene Ausnehmung (6) des Ringträgers (4) auf ihrer dem Hülsenkörper (5) zugewandten Innenseite (10) ein zum Gewinde (9) des Hülsenkörpers (5) korrespondierend ausgebildetes Gewinde (11) aufweist, *das es gestattet, den Zahnradkranz um die durch die Antriebswelle gebildete Verdrehachse zu verdrehen,*
*wodurch eine Verdrehbewegung des Zahnradkranzes in Relation zum Hülsenkörper und damit auch in Relation zur Antriebswelle möglich ist und diese Verdrehmöglichkeit dazu dient, hinsichtlich der Positionierung des Zahnradkranzes in Längserstreckung der Antriebswelle eine Feinjustage vornehmen zu können, wobei der Zahnradkranz je nach Drehrichtung in axialer Richtung der Antriebswelle in Relation zur Antriebswelle wandert.*

2. Kettenzahnrad nach Anspruch 1, **dadurch gekennzeichnet, dass** der Zahnradring (3) und der Ringträger (4) einstückig ausgebildet sind.

3. Kettenzahnrad nach Anspruch 1, **dadurch gekennzeichnet, dass** eine der Halbschalen (12, 13) eine längsverlaufende Nut (14) zur Aufnahme einer antriebswellenseitigen Passfeder aufweist.

4. Kettenzahnrad nach einem der vorhergehenden Ansprüche, **dadurch gekennzeichnet, dass** der Zahnradkranz (2) zweiteilig ausgebildet ist und über zwei miteinander korrespondierend e Zahnradkranzhälften (36, 37) verfügt.

5. Kettenzahnrad nach Anspruch 4, **dadurch gekennzeichnet, dass** die beiden Zahnradkranzhälften (36, 37) im endmontierten Zustand miteinander verschraubt sind.

6. Kettenzahnrad nach Anspruch 4 oder 5, **dadurch gekennzeichnet, dass** zur Verbindung der beiden Zahnradkranzhälften (36, 37) Klemmbügel (23)vorgesehen sind, die Klemmstege (24, 25) bereitstellen, die im endmontierten Zustand in korrespondierend ausgebildete Ausnehmungen (31, 32) der Zahnradkranzhälften (36, 37) eingreifen.

7. Kettenzahnrad nach einem der vorhergehenden Ansprüche, **gekennzeichnet durch** Mittel zur verdrehfesten Anordnung des Zahnradkranzes (2)auf dem Hülsenkörper (5).

8. Kettenzahnrad nach Anspruch 7, **dadurch gekennzeichnet, dass** ein Mittel ein Bolzen (35) ist, der im endmontierten Zustand in korrespondierend zueinander ausgebildete Nuten (33, 34) von Hülsenkörper (5) und Zahnradkranz (2) gleichsam eingreift.

## Claims

1. Sprocket for arranging on a drive shaft, with a gear rim (2) which has an outer toothed gear ring (3) and a ring carrier (4), and with a bush body (5), the ring carrier (4) having a recess (6) for receiving the bush body (5) and the bush body (5) having a recess (7) for receiving the drive shaft, so that the gear rim (2) can be arranged on the drive shaft with intermediate arrangement of the bush body (5),
*the bush body (5) has a two-part configuration and two mutually corresponding half-shells (12, 13),*
*the two half-shells (12, 13) being screwed together in the end-mounted state,*
the bush body (5) being equipped on its external circumferential surface (8) with a thread (9) and the recess (6), provided for receiving the bush body (5), of the ring carrier (4) having, on its inner side (10) orientated towards the bush body (5), a thread (11) configured correspondingly to the thread (9) of the bush body (5) *which permits the gear rim to rotate about the axis of rotation formed by the drive shaft,*
*as a result of which a rotational movement of the gear rim relative to the bush body and hence also relative to the drive shaft is possible and this rotational possibility serves for the purpose,*
*with respect to the positioning of the gear rim in the longitudinal extension of the drive shaft, of being able to undertake a fine adjustment, the gear rim adjusting according to the direction of rotation in the axial direction of the drive shaft relative to the drive shaft.*

2. Sprocket according to claim 1, **characterised in that** the gear ring (3) and the ring carrier (4) are configured in one piece.

3. Sprocket according to claim 1, **characterised in that** one of the half-shells (12, 13) has a longitudinally extending groove (14) for receiving a drive shaft-side feather key.

4. Sprocket according to one of the preceding claims, **characterised in that** the gear rim (2) has a two-part configuration and two mutually corresponding gear rim halves (36, 37).

5. Sprocket according to claim 4, **characterised in that** the two gear rim halves (36, 37) are screwed together in the end-mounted state.

6. Sprocket according to claim 4 or 5, **characterised in that**, for connecting the two gear rim halves (36, 37), clamping bows (23) are provided which provide clamping webs (24, 25), which, in the end-mounted state, engage in correspondingly configured recesses (31, 32) of the gear rim halves (36, 37).

7. Sprocket according to one of the preceding claims, **characterised by** means for non-rotatable arrangement of the gear rim (2) on the bush body (5).

8. Sprocket according to claim 7, **characterised in that** a means is a bolt (35) which, in the end-mounted state, engages as it were in grooves (33, 34), which are configured correspondingly to each other, of bush body (5) and gear rim (2).

## Revendications

1. Roue dentée à chaîne à disposer sur un arbre d'entraînement, avec une couronne de roue dentée (2), qui présente une bague de roue dentée (3) à denture extérieure et un support de bague (4), et avec un corps de douille (5), dans laquelle le support de bague (4) présente un évidement (6) pour la réception du corps de douille (5) et le corps de douille (5) un évidement (7) pour la réception de l'arbre d'entraînement, de sorte que la couronne de roue dentée (2) peut être disposée sur l'arbre d'entraînement avec intercalage du corps de douille (5),
*le corps de douille (5) est réalisé en deux parties et dispose de deux demi-coques (12, 13) correspondant l'une à l'autre, dans laquelle*
les deux demi-coques (12, 13) dans l'état de montage final sont vissées l'une avec l'autre, dans laquelle le corps de douille (5) est équipé sur sa surface d'enveloppe (8) côté extérieur d'un filet (9), et dans laquelle l'évidement (6) du support de bague (4) prévu pour la réception du corps de douille (5) présente sur sa face intérieure (10) tournée vers le corps de douille (5) un filet (11) réalisé de manière correspondante au filet (9) du corps de douille (5), qui permet d'amener la couronne de roue dentée en rotation autour de l'axe de rotation formé par l'arbre d'entraînement ; *ce qui a pour effet qu'un mouvement de rotation de la couronne de roue dentée par rapport au corps de douille et ainsi également par rapport à l'arbre d'entraînement est possible et cette possibilité de rotation sert, en ce qui concerne le positionnement de la couronne de roue dentée dans la direction longitudinale de l'arbre d'entraînement, à pouvoir réaliser un réglage précis, dans laquelle la couronne de roue dentée se déplace par rapport à l'arbre d'entraînement en fonction du sens de rotation dans la direction axiale de l'arbre d'entraînement.*

2. Couronne de roue dentée selon la revendication 1, **caractérisée en ce que** la bague de roue dentée (3) et le
support de roue (4) sont réalisés d'une seule pièce.

3. Couronne de roue dentée selon la revendication 1, **caractérisée en ce qu'**une des demi-coques (12, 13) présente une rainure (14) s'étendant longitudinalement pour la réception d'une clavette côté arbre d'entraînement.

4. Couronne de roue dentée selon l'une quelconque des revendications précédentes, **caractérisée en ce que** la couronne de roue dentée (2) est réalisée en deux parties et dispose de deux moitiés de couronne de roue dentée (36, 37) correspondant l'une à l'autre.

5. Couronne de roue dentée selon la revendication 4, **caractérisée en ce que** les deux moitiés de couronne de roue dentée (36, 37) dans l'état de montage final sont vissées l'une avec l'autre.

6. Couronne de roue dentée selon la revendication 4 ou 5, **caractérisée en ce que** pour la liaison des deux moitiés de couronne de roue dentée (36, 37) des étriers de serrage (23) sont prévus, qui fournissent des barrettes de serrage (24, 25), qui dans l'état de montage final s'insèrent dans des évidements (31, 32) réalisés de manière correspondante des moitiés de couronne de roue dentée (36, 37).

7. Couronne de roue dentée selon l'une quelconque des revendications précédentes, **caractérisée par** des moyens pour la disposition solidaire en rotation de la couronne de roue dentée (2) sur le corps de douille (5).

8. Couronne de roue dentée selon la revendication 7, **caractérisée en ce qu'**un moyen est un boulon (35), qui dans l'état de montage final s'insère en quelque sorte dans des rainures (33, 34) réalisées de manière correspondante l'une à l'autre du corps de douille (5) et de la couronne de roue dentée (2).
